## Europäisches Patentamt
## European Patent Office
## Office européen des brevets

(19)

(11) Numéro de publication: **0 052 715**
**B1**

(12)

# FASCICULE DE BREVET EUROPEEN

(45) Date de publication du fascicule du brevet: **03.10.84**

(51) Int. Cl.³: **B 60 N 1/00**

(21) Numéro de dépôt: **81107631.4**

(22) Date de dépôt: **25.09.81**

(54) **Dispositif de fixation, notamment pour sièges de véhicules.**

(30) Priorité: **26.11.80 FR 8025041**

(43) Date de publication de la demande:
**02.06.82 Bulletin 82/22**

(45) Mention de la délivrance du brevet:
**03.10.84 Bulletin 84/40**

(84) Etats contractants désignés:
**BE DE GB IT NL**

(56) Documents cités:
**DE-A-2 719 455**
**DE-C- 915 420**
**FR-A-1 026 800**
**FR-A-1 535 108**
**FR-A-2 135 828**
**GB-A-1 054 377**
**US-A-4 167 285**

(73) Titulaire: **RENAULT VEHICULES INDUSTRIELS**
**Société Anonyme dite:**
**129 rue Servient "La Part Dieu"**
**F-69003 Lyon (FR)**

(72) Inventeur: **Bayon, Albert Henri**
**Rue J.J. Besset**
**F-07100 Annonay (FR)**

(74) Mandataire: **Casalonga, Alain et al**
**BUREAU D.A. CASALONGA OFFICE JOSSE &**
**PETIT Baaderstrasse 12-14**
**D-8000 München 5 (DE)**

Courier Press, Leamington Spa, England.

## Description

La présente invention se rapporte à un dispositif de fixation, notamment pour sièges de véhicules et concerne plus particulièrement et de préférence un dispositif de fixation pour siège de véhicule de transport en commun.

L'invention se propose principalement de réaliser un dispositif de verrouillage et d'immobilisation rapide d'une armature de siège sur une glissière. L'invention concerne de plus un dispositif de fixation rapide qui simplifie les modifications dans la disposition des sièges dans le véhicule. Elle concerne enfin un dispositif de fixation d'un élément d'armature de siège le long d'une glissière à gouttière sensiblement horizontale dont les bords verticaux ont des hauteurs inégales, tel que décrit dans le brevet US—A—4167285. Dans ce brevet, le dispositif de fixation comprend un profilé muni d'un évidement longitudinal dans lequel pénètre l'extrémité inférieure d'une jambe verticale fixée au siège, cette jambe étant maintenue dans ledit évidement grâce à une pièce supplémentaire constituée par une vis. Ces dispositifs nécessitent l'emploi d'organes rapportés sur l'armature du siège tels que des pattes soudées et nécessitent un certain nombre de pièces d'assemblage. Il en résulte que la mise en place et la modification des emplacements des sièges sont des opérations longues et coûteuses.

L'invention se propose de simplifier les opérations de mise en place et de modification des emplacements des sièges.

Elle réside dans le fait que le bord le plus haut de ladite glissière à gouttière se prolonge par une surface inclinée d'appui et de coincement qui constitue conjointement avec le fond de la gouttière et l'autre bord de celle-ci, une zone d'encastrement d'un profil rigidement lié au siège dont la forme est complémentaire de celle de cette zone d'encastrement.

Dans une variante, ladite glissière à gouttière et ledit profil du dispositif de fixation selon la présente invention sont constitués par deux cornières complémentaires dont les ailes verticales de la première paire coopérant par encastrement et dont les ailes horizontales de l'autre paire sont superposées.

L'invention ainsi réalisée est particulièrement satisfaisant du point de vue de l'esthétique étant donné qu'elle supprime tout organe de fixation et par voie de conséquence les aspérités d'organes de fixation susceptibles d'occasionner des blessures aux passagers en station debout dans le couloir du véhicule.

Un autre avantage de l'invention réside dans le fait d'une plus grande flexibilité des conditions d'exploitation du véhicule du fait qu'il devient aisé de changer de type de sièges ou de modifier leur emplacement dans le compartiment de voyageurs.

L'invention propose donc un aménagement pour véhicules de transport en commun dont l'esthétique et le confort peuvent être modifiés très rapidement en cas de changement d'affectation du véhicule. L'invention est bien entendu applicable à d'autres éléments d'aménagement tels que des paniers à bagages, mains courantes etc..

Le dispositif qui fait l'objet de l'invention sera décrit plus en détail au dessin annexé dans lequel:

— la figure 1 est un ensemble de deux sièges en cours de sa mise en place.
— la figure 2 représente l'ensemble de sièges de la figure 1 mis en place.
— la figure 3 représente l'élément de profil lié au siège en cours de positionnement dans la gouttière.
— la figure 4 représente l'assemblage de l'élément de profil et de la gouttière représentés à la figure 3.

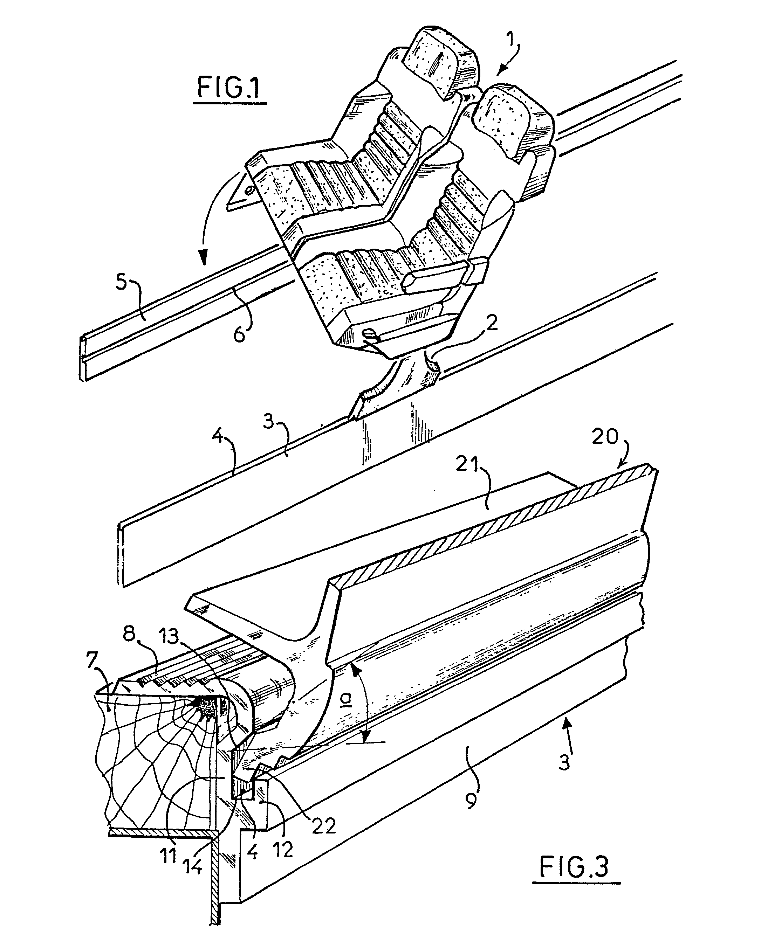

Si l'on se reporte à la figure 1, on voit que la rangée de sièges 1 repose par ses éléments d'armature ou par son soubassement 2, respectivement sur une glissière 3 à gouttière horizontale 4 et une glissière verticale 5 munie d'une rainure verticale 6.

La glissière 3 représentée plus en détail à la figure 3 est constituée par un profil métallique en forme de cornière fixée sur le bord du plancher supérieur 7 du véhicule à deux niveaux formant le socle de l'ensemble des sièges. La cornière possède une aile horizontale 8 et une aile verticale 9. Celle-ci peut être réalisée à partir d'un profil extrudé en alliage d'aluminium mais toute autre matière satisfaisant aux conditions de résistance et d'esthétique du matériau pourrait convenir.

L'aile verticale 9 porte la gouttière 4 dont les bords verticaux 11, 12 ont des hauteurs inégales, le plus haut bord 11 se prolonge par une surface d'appui et de coincement 13 qui s'étend au dessus du fond 14 de la gouttière et qui possège une inclinaison (a) qui l'éloigne du bord inférieur 12. La surface d'appui 13, le bord 11, le fond 14 et le bord de hauteur inférieure 12 constituent la zone d'encastrement d'un profil 20 rigidement lié au soubassement 2 du siège, dont la forme est complémentaire de celle de la zone précitée. Le profil 20 constitue par voie de conséquence également une cornière dont l'aile horizontale 21 vient se superposer à l'aile horizontale 8 de la glissière 3 et dont l'aile verticale 22 est encastrée dans la gouttière 4.

Le profil 20 est présenté face à la glissière 3 sous un angle d'environ $\pi/4$ et est positionné en appui sur le bord inférieur 12 avant l'engagement dans la gouttière 4.

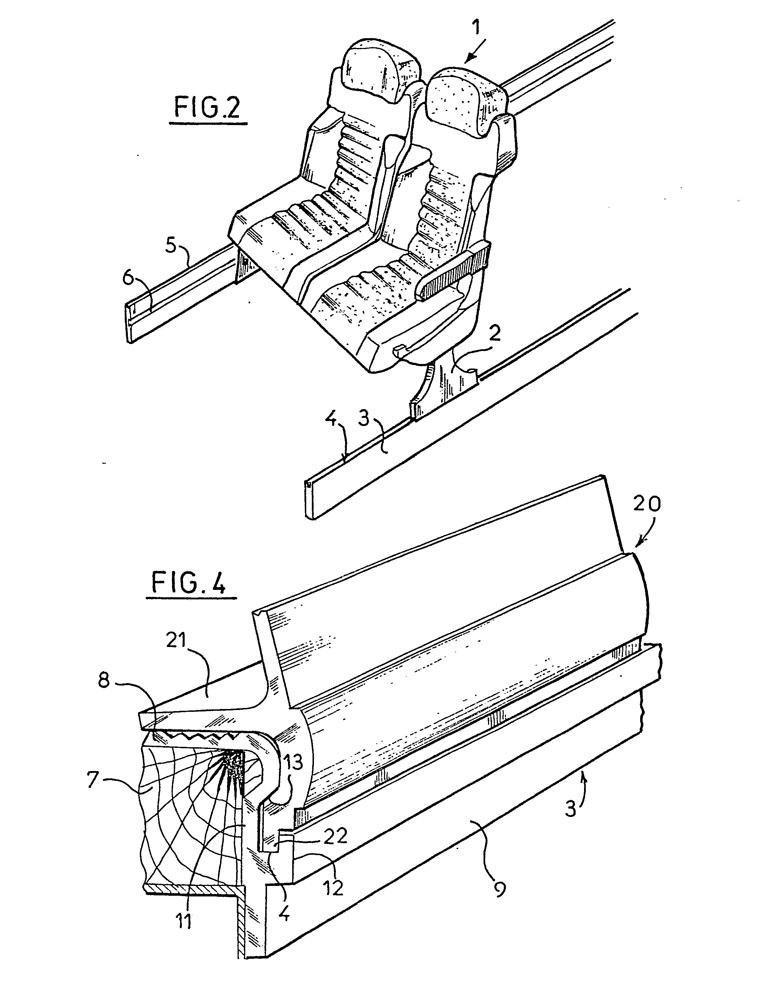

On fait alors pivoter jusqu'à l'horizontale l'ensemble des deux sièges du même rang comme représenté aux figures 1—3. Les deux profils sont alors immobilisés l'un par rapport à l'autre par coincement des profils favorisé par le poids des sièges.

Le verrouillage définitif de la rangée de sièges contre la glissière verticale 5 s'effectue par tout moyen connu, le dispositif illustré par le brevet FR—A—2 135 828 déposé au nom de Saviem pourrait par exemple convenir.

Le dispositif conforme à l'invention satisfait également aux exigences de la sécurité lors des ralentissements brutaux des véhicules. Les efforts d'inertie appliquées sur le dispositif sont susceptibles d'être absorbés effectivement par frottement des profils l'un sur l'autre.

## Revendications

1. Dispositif de fixation notamment pour sièges de véhicules de transport en commun le long d'une glissière à gouttière (4) sensiblement horizontale dont les bords verticaux (11, 12) ont des hauteurs inégales, caractérisé en ce que le bord le plus haut (11) se prolonge par une surface inclinée d'appui (13) et de coincement qui constitue conjointement avec le fond (14) de la gouttière (4) et l'autre bord (12) de celle-ci, une zone d'encastrement d'un profil (20) rigidement lié au siège dont la forme est complémentaire de celle de cette zone d'encastrement, maintenant à elle seule le siège par rapport à la glissière.

2. Dispositif de fixation selon la revendication 1, caractérisé par le fait que la glissière à gouttière (4) et le profil (20) sont constitués par deux cornières complémentaires dont les aîles verticales (9, 22) de la première paire coopèrent par encastrement et dont les aîles (8, 21) horizontales de l'autre paire sont superposées.

## Patentansprüche

1. Befestigungsvorrichtung, insbesondere zum Befestigen von Sitzen in Personenbeförderungsfahrzeugen entlang einer im wesentlichen waagrecht verlaufenden Gleitschiene in Rinnenform (4), deren senkrechte Wände (11, 12) ungleich hoch sind, dadurch gekennzeichnet, daß der höhere Rand (11) in eine geneigte Anlage und Klemmfläche (13) übergeht, die zusammen mit dem Grund (14) der Führungsrinne (4) und dem anderen Rand (12) derselben einen Eingriffsbereich für ein Profil (20) bilden, das starr mit dem Sitz verbunden ist und dessen Form komplementär zum genannten Eingriffsbereich ist, welcher allein den Sitz relativ zur Gleitschiene festhält.

2. Befestigungsvorrichtung gemäß Anspruch 1, dadurch gekennzeichnet, daß die Gleitschiene in Rinnenform (4) und das Profil (20) aus zwei komplementären Winkelprofilen bestehen, deren senkrechte Flügel (9, 22) des resten Paares ineinandergreifen und deren waagrechte Flügel (8, 21) des anderen Paares übereinanderliegen.

## Claims

1. A fixing system notably for fixing public transport vehicle seats along a roughly horizontal channel slideway (4) whose vertical side flanges (11, 12) are of differing heights, characterized in that the highest flange (11) is continued by an inclined support and jamming surface (13) which forms, in conjunction with the bottom (14) of the channel (4) and the other flange (12) thereof, a fitting zone for a section (20) which is rigidly jointed to the seat and whose shape is complementary to that of said fitting zone, so that said zone alone holds the seat fixed with respect to the slideway.

2. The fixing device according to claim 1, characterized in that the channel slideway (4) and the section (20) consist of two complementary angle sections having the vertical flanges (9, 22) of the first pair fitting together and the horizontal flanges (8, 21) of the other pair superimposed.

FIG.1

1

5

6

2

4

3

21

20

8

13

7

a

3

11

14

4

12

22

9

FIG.3

FIG.2

5

6

1

2

4 3

FIG.4

20

21

8

7

13

11

22

12

4

9

3